(19) Europäisches Patentamt
European Patent Office
Office européen des brevets

(11) Veröffentlichungsnummer: **0 127 604**
**B1**

# (12) EUROPÄISCHE PATENTSCHRIFT

(45) Veröffentlichungstag der Patentschrift: **13.05.87**

(51) Int. Cl.⁴: **C 02 F 11/14**

(21) Anmeldenummer: **84890087.4**

(22) Anmeldetag: **15.05.84**

(54) **Verfahren zur Vorbehandlung von Schlämmen zur Verbesserung des Flockungs- und/oder Entwässerungsverhaltens in einer nachfolgenden Entwässerungsvorrichtung.**

(30) Priorität: **30.05.83 AT 1974/83**
**30.05.83 AT 1976/83**

(43) Veröffentlichungstag der Anmeldung:
**05.12.84 Patentblatt 84/49**

(45) Bekanntmachung des Hinweises auf die Patenterteilung:
**13.05.87 Patentblatt 87/20**

(84) Benannte Vertragsstaaten:
**AT CH DE FR IT LI SE**

(56) Entgegenhaltungen:
**DE - A - 2 645 549**
**DE - C - 135 830**
**US - A - 3 530 067**
**US - A - 4 196 077**
**US - A - 4 210 531**

(73) Patentinhaber: **VOEST-ALPINE Aktiengesellschaft, Friedrichstrasse 4, A-1011 Wien (AT)**

(72) Erfinder: **Schweizer, Michel, Dipl.-Ing., Gössgraben 16, A-8793 Trofaiach (AT)**
Erfinder: **Puschenjak, Erwin, Bahnhofstrasse 1, A-8714 Kraubath (AT)**

(74) Vertreter: **Haffner, Thomas M., Dr. et al, Patentanwaltskanzlei Dipl.-Ing. Adolf Kretschmer Dr. Thomas M. Haffner Schottengasse 3a, A-1014 Wien (AT)**

EP 0 127 604 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren zur Vorbehandlung von Schlämmen zur Verbesserung des Flockungs- und/oder Entwässerungsverhaltens in einer nachfolgenden Entwässerungsvorrichtung, bei welchem gegebenenfalls Polyelektrolyte als Flockungshilfsmittel zugesetzt werden. Zur Konditionierung von Schlämmen ist es bekannt, Polyelektrolyte als Flockungshilfsmittel einzusetzen. Es ist weiters bekannt, Schlämme durch thermische Konditionierung, beispielsweise durch Anwendung eines Druckes von 30 bar und eine Erwärmung auf 300°C, für eine nachfolgende Abtrennung des Wassers vorzubereiten. Eine derartige Konditionierung ist aber nicht für alle Schlämme geeignet und ist darüber hinaus apparativ aufwendig und mit hohem Energieaufwand verbunden. Die bei derartigen Konditionierungen auftretenden Zersetzungsprodukte machen die Weiterbehandlung des abgetrennten Stoffwassers schwierig.

Biologische Schlämme werden üblicherweise einer Verbrennung zugeführt, wobei die Verbrennung in der Regel nicht ohne Stützfeuerung möglich ist. Dies ist zum einen auf den relativ hohen Wassergehalt der entwässerten Produkte zurückzuführen und zum anderen auf den zu geringen Anteil an brennbaren Substanzen in derartigen biologischen Schlämmen.

Aus der US-A 4 196 077 ist es bekanntgeworden, einem Abwasserschlamm Kohlenwasserstofföle zuzusetzen. Anschliessend wird eine Trennung der Ölschicht mit Feststoffen aus dem Abwasserschlamm von der Wasserschicht durchgeführt. Aus der DE-A 2 645 549 ist es bereits bekanntgeworden, Schlämme zur Verbesserung der Flockung unter Anwendung von kationischen Flockungsmitteln einer Voroxidation zu unterziehen. Zur Erzielung von stabilen organischen Flocken werden hierbei gemeinsam mit Wasserstoffperoxid Metallionen mit mindestens dreiwertiger positiver Ladung eingesetzt.

Die Erfindung zielt nun darauf ab, ein Verfahren der eingangs genannten Art zu schaffen, mit welchem die vorbehandelten Schlämme leichter in einfachen mechanischen Entwässerungsvorrichtungen entwässert werden können und ein Produkt erhalten werden kann, welches unmittelbar und ohne Stützfeuerung verbrannt werden kann. Zur Lösung dieser Aufgabe besteht die Erfindung im wesentlichen darin, dass die Schlämme auf einen Trockensubstanzgehalt von wenigstens 5 Gew.-% eingedickt werden, dass dem zu entwässernden Schlamm vor der mechanischen Entwässerung flüssige, brennbare, organische Zusätze, wie z.B. Öle, insbesondere Altöl, in Mengen von 0,5 bis 50 Gew.-%, bezogen auf den Tockensubstanzgehalt des Schlammes und zusätzlich zu den flüssigen, brennbaren, organischen Zusätzen Oxidationsmittel, insbesondere Wasserstoffperoxid, Sauerstoff oder Luft, zugesetzt werden. Durch den Zusatz von flüssigen, brennbaren, organischen Zusätzen, wie z.B. Öle, insbesondere Altöl, wird hiebei der Vorteil erreicht, dass gleichzeitig mit einer Verbesserung des Entwässerungsverhaltens auch die Altölentsorgung erleichtert wird. Durch die Zugabe von derartigen organischen Substanzen, wie Altöl, wird die relative Tockensubstanzmenge erhöht und der Heizwert des entwässerten Produktes gesteuert, so dass es möglich wird, diese Schlämme ohne Stützfeuerung zu verbrennen. Es hat sich darüber hinaus gezeigt, dass der Zusatz von Altöl das Koagulierungsverhalten und damit die Entwässerbarkeit in einfachen mechanischen Pressen wesentlich verbessert und die mechanische Belastbarkeit des Schlammes in einer nachfolgenden Entwässerungsvorrichtung gesteigert wird. Das zugegebene Altöl wird an den zu entwässernden Teilchen adsorbiert und vom Schlamm aufgenommen, wobei bis zu 50 Gew.-%, bezogen auf den Trockensubstanzgehalt des Schlammes an Altöl zugegeben werden kann, ohne dass die Gefahr besteht, dass derartiges Altöl in einer nachfolgenden mechanischen Entwässerung wiederum in nennenswerten Mengen ausgepresst und in das Abwasser gelangt. Wenn jedoch mehr als 50 Gew.-% Öl zugesetzt wird, wird dieses Öl in der mechanischen Entwässerung wiederum abgeschieden und setzt sich ab, was naturgemäss unerwünscht ist. Das an der Oberfläche der zu entwässernden Schlämme adsorbierte Öl verdrängt offensichtlich die Hydrathülle bzw. sprengt diese ab, so dass das abzutrennende Wasser leichter abfliessen kann. Öl, insbesondere Altöl, zeigt ausgeprägte hydrophobe Eigenschaften, so dass der Zusatz von derartigen Ölen die Abtrennbarkeit des Stoffwassers wesentlich erleichtert. Insbesondere bei biologischen Schlämmen erfolgt in der Regel ein fermentativer Abbau, welcher zu unerwünschten Verunreinigungen im Abwasser führt. Dadurch, dass erfindungsgemäss den Schlämmen zusätzlich zu den Ölen Oxidationsmittel, insbesondere Wasserstoffperoxid, zugesetzt werden, lässt sich dieser fermentative Abbau zurückdrängen, und es hat sich gezeigt, dass überaus geringe Mengen von Oxidationsmitteln, wie beispielsweise Wasserstoffperoxid, eine bedeutende Verbesserung des Entwässerungsverhaltens in mechanischen Entwässerungsvorrichtungen mit sich bringen. Überraschenderweise bewährte sich der Zusatz von Oxidationsmitteln auch bei an und für sich äusserst schwierig zu behandelnden mineralischen Schlämmen und führte zu einer wesentlichen Verbesserung der Entwässerungsleistung von konventionellen Trockenpressen, wie beispielsweise Siebbandpressen. Dadurch, dass die Schlämme vor der oxidativen Behandlung und vor der Ölzugabe auf einen Tockensubstanzgehalt von wenigstens 5 Gew.-% eingedickt werden, eine wesentliche Erhöhung der durch den Zusatz von Ölen und Oxidationsmitteln erzielbaren Verbesserung des Entwässerungsverhaltens in einer nachgeschalteten Siebbandpresse erzielt werden.

Vorzugsweise wird als Oxidationsmittel 30%iges $H_2O_2$ in Mengen von 0,5 bis 10, insbesondere 1 bis 3 $l/m^3$ Schlamm, zugesetzt. Anstelle der Zugabe von Oxidationsmitteln lässt sich eine Verbesserung des Entwässerungsverhaltens auch dadurch erreichen, dass die Schlämme vor der Ölzugabe oxidativ, insbesondere durch Einblasen von Luft und/oder Sauerstoff, vorbehandelt werden.

Vor allen Dingen hat der Zusatz von Oxidationsmitteln gemeinsam mit Ölen einen Einfluss auf das Koagulierungsverhalten und damit die Entwässerbarkeit des Schlammes in einfachen mechanischen Pressen, wobei die mechanische Belastbarkeit des Schlammes in der nachfolgenden Entwässerungsvorrichtung durch den Zusatz von Oxidationsmitteln gesteigert werden kann.

Die Erfindung wird nachfolgend anhand von in der Zeichnung dargestellten Flussdiagrammen näher erläutert. Die Fig. 1 bis 3 zeigen hiebei verschiedene Varianten der erfindungsgemässen Verfahrensführung.

Bei der Verfahrensweise nach Fig. 1 wird Schlamm einem Mischer zugeführt, wobei dem Mischer 3 l 30%iges $H_2O_2/m^3$ Schlamm und Altöl in Mengen von 0,5 t/t Tockensubstanz zugesetzt wurde. Gleichzeitig wurde in den Mischer über einen Zeitraum von etwa 5 min Luft eingepresst, wodurch sich eine weitere intensive Vermischung und/oder Oxidation ergab. Der Schlamm wurde hierauf aus dem Mischer einer Flockungsvorrichtung zugeführt, in welcher eine neuerliche Oxidation durch Zusatz von Wasserstoffperoxid oder Einpressen von Luft vorgenommen werden kann. Der so erhaltene geflockte Schlamm kann unter Zwischenschaltung einer Flotation zur Anreicherung der Feststoffe oder unmittelbar einer Entwässerungsstufe, wie beispielsweise einer Siebbandpresse, zugeführt werden, wobei der auf diese Weise erhaltene Presskuchen einer Schlammverwertung oder -vernichtung zugeführt werden kann.

Gemäss Fig. 2 wird wiederum von einem Schlamm von etwa 5 Gew.-% Tockensubstanzgehalt ausgegangen. Im Mischbehälter werden in der Folge dem Schlamm 3 l 30%iges $H_2O_2/m^3$ Altöl in Mengen von 2,5 Gew.-% und gegbenenfalls zusätzlich ein Elektrolyt zugeführt. Die Mischung wird einem Flockungsbehälter zugeführt, welchem wiederum Polyelektrolyt in Mengen von 230 $g/m^3$ zugesetzt wird. Die Flockung kann durch Zugabe von $H_2O_2$ verbessert werden. Bei nachfolgend vorgenommener Flotation zur Anreicherung der Feststoffe kann gegebenenfalls zusätzlich Luft eingeblasen werden und das auf diese Weise erhaltene angereicherte Gemisch kann in einer Filterbandpresse oder einer Zentrifuge bis auf 30 oder 35 Gew.-% Tockensubstanzgehalt entwässert werden. Das erhaltene Produkt kann schliesslich einer Verbrennung oder einer Deponie zugeführt werden.

Bei der Verfahrensweise nach Fig. 3 wird dem wiederum auf einen Tockensubstanzgehalt von 5 Gew.-% eingedickten Schlamm Luft bzw. Sauerstoff in einem Belüfter zugeführt, wobei die Belüftung über einen Zeitraum von etwa 5 min durchgeführt wurde. In einem nachfolgenden Intensivmischer wurden wiederum 20 $l/m^3$ Schlamm zugeführt und 3 kg $FeCl/m^3$ Schlamm als Elektrolyt zugeführt. Der nachfolgenden Flockungseinrichtung wurde in der bereits beschriebenen Weise Polyelektrolyt in einer Menge von 230 $g/m^3$ zugeführt, worauf die Entwässerung wie zuvor beschrieben, wiederum auf einen Tockensubstanzgehalt von etwa 30 bis 35 Gew.-% ohne weiteres ermöglicht wurde.

Die Erfindung wird nachfolgend anhand eines Ausführungsbeispieles näher erläutert, wobei zu Vergleichszwecken ohne Zugabe von Öl und Oxidationsmitteln und mit Zugabe von Öl und Oxidationsmitteln gearbeitet wurde. Die Ergebnisse des Ausführungsbeispieles werden nachfolgend tabellarisch zusammengefasst, wobei das Ergebnis in der Kolonne A die Verfahrensweise ohne Öldosierung und ohne Oxidationsmittel und in der Kolonne B die Verfahrensweise mit Öldosierung und mit Oxidationsmittelzugabe zum Ausdruck bringt. Aus dem Beispiel ist klar ersichtlich, dass der Tockensubstanzgehalt des Schlammkuchens durch die Zugabe von Öl und Oxidationsmittel wesentlich erhöht wurde.

Vorklärschlamm von Kommunalabwasser-Reinigungsanlage

| | | A | B |
|---|---|---|---|
| TS-Gehalt Rohschlamm | % TS | 5 | 5 |
| Elektrolytdosierung | $kg/m^3$ | — | 2,75 |
| Öldosierung | kg/kg TS | — | 0,54 |
| Oxidationsmittel ($H_2O_2$) 30% | $kg/m_3$ | — | 2,50 |
| Polyelektrolytdosierung | g/kg TS | 3,5 | 3,5 |
| Siebbandpresse | kg $H_2O$/kg TS | 3,71 | 1,81 |
| Schlammkuchen TS-Gehalt | % TS | 21,2 | 35,6 |

Weiters wurden mineralische Trüben aufbereitet, wobei sich hier gezeigt hat, dass durch die Oxidation wesentliche Einsparungen an Flockungshilfsmitteln erzielt werden konnten.

Die bei der Aufbereitung von Mineralien notwendige Zerkleinerung führt durch den Energieeintrag zu einer Veränderung der Oberflächeneigenschaften der mineralischen Bestandteile. Es wurde ein deutlicher Zusammenhang zwischen der Adsorptionsrate und dem Energieeintrag gefunden. Bei verschiedenen Mineralien wurde nun nach einem Zerkleinerungsprozess beobachtet, dass die als Schlämme vorliegenden Zerkleinerungsprodukte, insbesondere aus einer Nassentstaubung, besonders schlecht oder nur unter Einsatz grosser Mengen von Flokkungshilfsmitteln flockbar waren.

Die Flockenbildung, Sedimentation und Entwässerung konnten in diesen Fällen grossteils dadurch verbessert werden, dass die Trübe vor oder während der Flockungshilfsmittelzugabe mit Oxidationsmitteln behandelt wurde. Häufig genügte eine kurzzeitige Belüftung bzw. Begasung mit $O_2$.

Für die Zwecke des nachfolgenden Ausführungsbeispieles wurde das Kondensat einer Dampfstrahlmühle einer Talkum-Aufbereitung mit einem

| | | |
|---|---|---|
| Feinkornanteil: | 80-90% | 63 µm |
| pH | 8,2 | |
| TS-Gehalt % | 596 $g/m^3$ | 0,6 g/l |
| Glühverlust (500°C) | 16,1% d.TS= 0,06% | |

eingesetzt.

Mit der nachfolgend beschriebenen Behandlung konnte weitgehend gleiche Trübung im Dekantat sowie eine Erhöhung der Sedimentationsgeschwindigkeit erzielt werden.

Dieses Ausgangsprodukt wurde zunächst mit 60 g/m$^3$ kationischem Polyelektrolyt und 2,5 g/m$^3$ anionischem Polyelektrolyt versetzt. Nach einem Eindicken auf 200 g/l wurde weiterer anionischer Polyelektrolyt in Mengen von 1 bis 2 g/kg Tockensubstanz zugesetzt. Nach dem Durchgang durch eine Siebbandpresse wurde der Trockengrad mit 50 bis 55% Tockensubstanz ermittelt. Alternativ wurde 100 g/m$^3$ $Al_2(SO_4)_3 \cdot 6\,H_2O$ sowie 5 g/m$^3$ anionischer Polyelektrolyt zugesetzt, wobei die gleichen Ergebnisse erzielt wurden. Schliesslich wurden 200 g/m$^3$ $FeCl_3 \cdot 6\,H_2O$ sowie 5 g/m$^3$ anionischer Polyelektrolyt eingesetzt, wobei wiederum vergleichbare Ergebnisse nach der Siebbandpresse erzielt werden konnten.

Abschliessend wurde in der erfindungsgemässen Weise vorgegangen, wobei nach Zusatz von 0,5 kg Altöl/kg Tockensubstanz ein fünfminütiges Belüften mit Luft bei einer Durchflussrate von 0,6 bis 1 Nm,$^3$/m$^3$ Trübe vorgenommen wurde. An kationischem Polyelektrolyt wurden nunmehr 0,5 g/m$^3$ Trübe zugesetzt. Nach dem Eindicken erfolgte eine weitere Zugabe von 1 bis 2 g/kg Tockensubstanz an anionischem Polyelektrolyt. Bei dieser Verfahrensweise konnten nach dem Durchgang durch die Siebbandpresse Werte von 60 bis 65% Trockensubstanz und damit deutlich verbesserte Werte gegenüber einer Behandlung ohne Ölzusatz und Sauerstoff erzielt werden.

Gleichzeitig macht dieses Beispiel deutlich, dass eine starke Reduktion des Chemikalien- bzw. Flockungshilfsmittelverbrauches durch eine Oxidation erreicht werden kann.

## Patentansprüche

1. Verfahren zur Vorbehandlung von Schlämmen zur Verbesserung des Flockungs- und/oder Entwässerungsverhaltens in einer nachfolgenden mechanischen Entwässerungsvorrichtung, bei welchem gegebenenfalls Polyelektrolyte als Flockungshilfsmittel zugesetzt werden, dadurch gekennzeichnet, dass die Schlämme auf einen Tockensubstanzgehalt von wenigstens 5 Gew.-% eingedickt werden, dass dem zu entwässernden Schlamm vor der mechanischen Entwässerung flüssige, brennbare, organische Zusätze, wie z.B. Öle, insbesondere Altöl, in Mengen von 0,5 bis 50 Gew.-%, bezogen auf den Tockensubstanzgehalt des Schlammes und zusätzlich zu den flüssigen, brennbaren, organischen Zusätzen Oxidationsmittel, insbesondere Wasserstoffperoxid, Sauerstoff oder Luft zugesetzt werden.

2. Verfahren nach Anspruch 1, dadurch gekennzeichnet, dass Öle in Mengen von 0,5 bis 10 Gew.-% zugesetzt werden.

3. Verfahren nach Anspruch 1 oder 2, dadurch gekennzeichnet, dass 30%iges $H_2O_2$ in Mengen von 0,5 bis 10, insbesondere 1 bis 3 l/m$^3$ Schlamm zugesetzt wird.

4. Verfahren nach einem der Ansprüche 1 bis 3, dadurch gekennzeichnet, dass die Schlämme vor der Ölzugabe oxidativ, insbesondere durch Einblasen von Luft und/oder Sauerstoff, vorbehandelt werden, wobei vorzugsweise Durchflussraten von 0,1-1 Nm$^3$/m$^3$ Schlamm über einen Zeitraum von 1-5 min angewendet werden.

## Claims

1. Process for the pre-treatment of sludges for improving their flocculation and/or dewatering behaviour in a subsequent dewatering apparatus, in which optionally polyelectrolytes are added as flocculating adjuvants, characterised in that the sludges are concentrated to a percentage of solids of at least 5% by weight, that prior to mechanical dewatering liquid combustible organic additives such as oils, particularly waste oil, are added to the sludge to be dewatered in an amount of from 0,5 to 50% by weight in relation to the percentage of solids of the sludge, and that in addition to the liquid combustible organic additives oxidizing agents, particularly hydrogen peroxide, oxygen or air, are added.

2. Process as claimed in claim 1, characterised in that oils are added in an amount of from 0,5 to 10% by weight.

3. Process as claimed in claim 1 or 2, characterised in that $H_2O_2$ of 30% concentration is added in an amount of from 0,5 to 10, particularly 1 to 3, litres per m$^3$ of mud.

4. Process as claimed in any one of claims 1 to 3, characterised in that prior to adding oil the sludges are pre-treated oxidizingly, particularly by injecting air and/or oxygen, whereat preferably flow rates of from 0.1 to 1 m$^3$ under standard conditions per m$^3$ of mud are observed during a time period of from 1 to 5 minutes.

## Revendications

1. Procédé de prétraitement de boues destiné à améliorer leur floculation et/ou leur déshydratation dans un dispositif mécanique de déshumidification ultérieur, avec lequel le cas échéant, on ajoute des polyélectrolytes comme floculants, caractérisé en ce qu'on concentre les boues jusqu'à une teneur en substances sèches d'au moins 5% en poids, en ce que l'on ajoute aux boues à déshydrater, avant la déshydratation mécanique, des substances liquides, combustibles, organiques, telles que des huiles, notamment de l'huile usée, à raison de 0,5 à 50% en poids, par rapport à la teneur en substances sèches des boues, ainsi qu'en plus des substances liquides, combustibles, organiques, des oxydants, notamment du peroxyde d'hydrogène, de l'oxygène ou de l'air.

2. Procédé selon la revendication 1, caractérisé en ce que l'on ajoute des huiles à raison de 0,5 à 10% en poids.

3. Procédé selon la revendication 1 ou 2, caractérisé en ce l'on ajoute $H_2O_2$ à 30% à raison de 0,5 à 10 litres, notamment de 1 à 3 litres/m$^3$ de boues.

4. Procédé selon l'une des revendications 1 à 3, caractérisé en ce que les boues sont prétraitées par oxydation, notamment par insufflation d'air et/ou d'oxygène, avant l'addition d'huile, de préférence à un débit de 0,1 à 1 Nm$^3$/m$^3$ de boues pendant 1 à 5 minutes.

FIG. 1

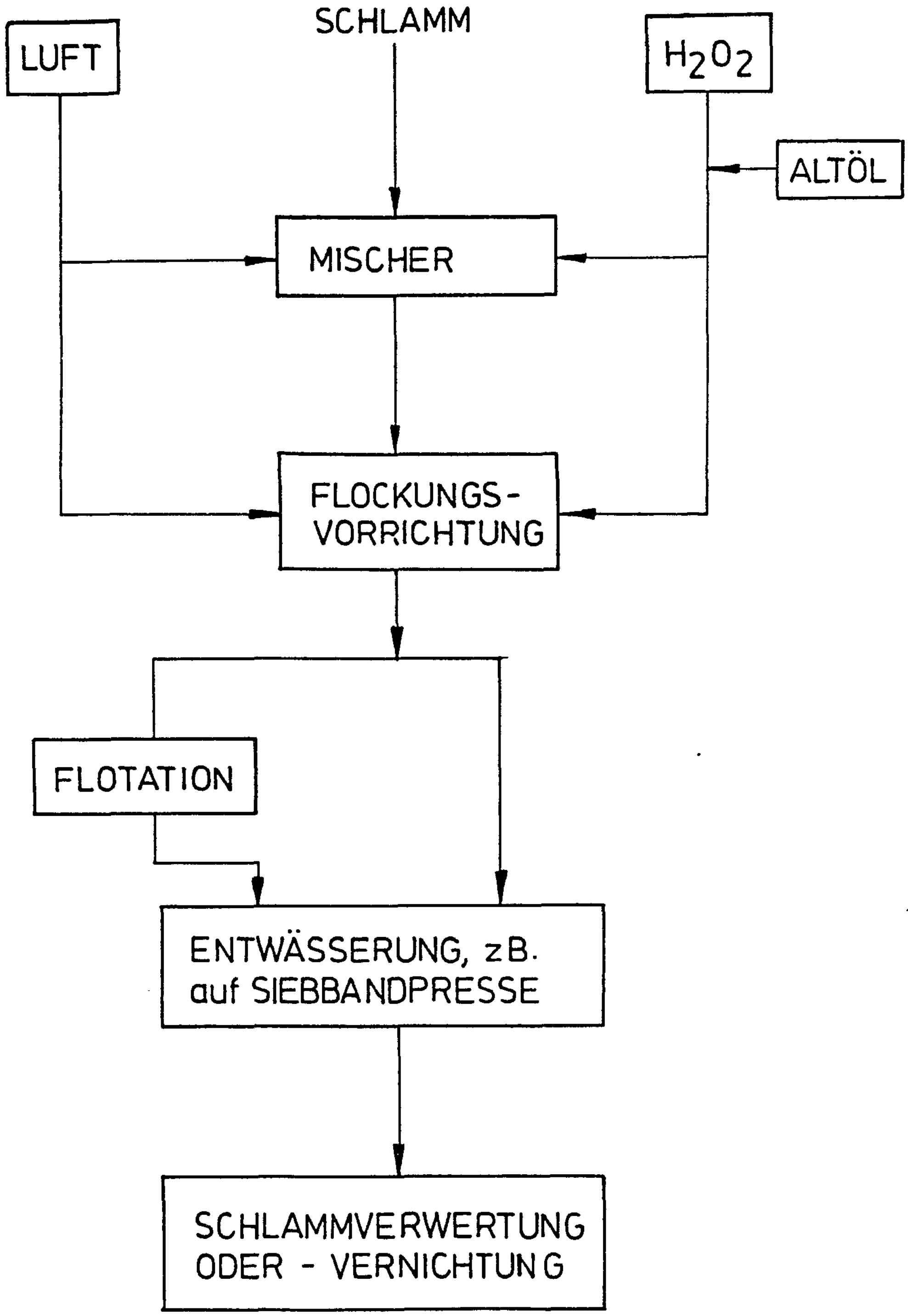
LUFT
SCHLAMM
$H_2O_2$
ALTÖL
MISCHER
FLOCKUNGS-
VORRICHTUNG
FLOTATION
ENTWÄSSERUNG, zB.
auf SIEBBANDPRESSE
SCHLAMMVERWERTUNG
ODER - VERNICHTUNG

FIG. 2

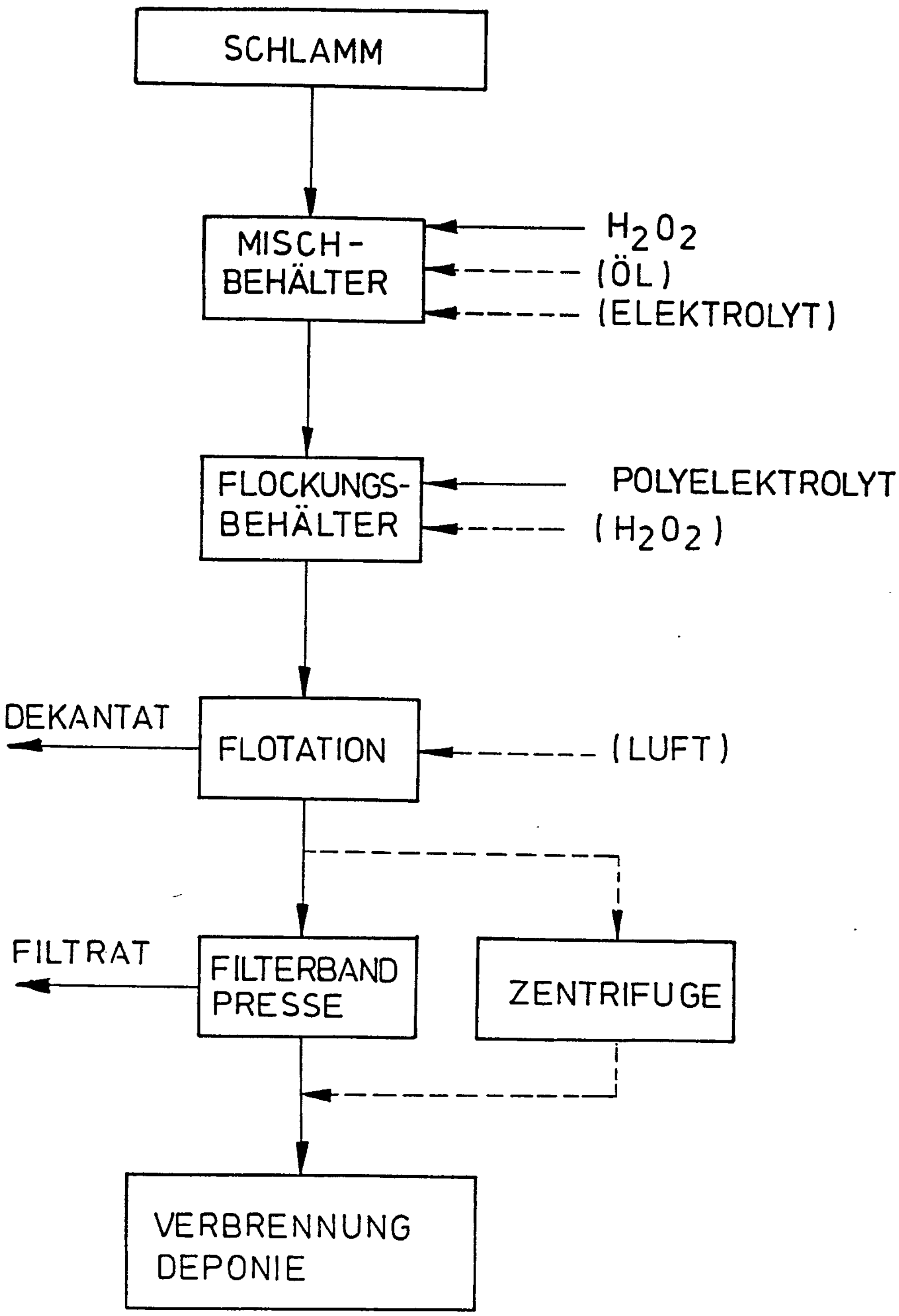
SCHLAMM
MISCH-BEHÄLTER
$H_2O_2$
(ÖL)
(ELEKTROLYT)
FLOCKUNGS-BEHÄLTER
POLYELEKTROLYT
($H_2O_2$)
DEKANTAT
FLOTATION
(LUFT)
FILTRAT
FILTERBAND PRESSE
ZENTRIFUGE
VERBRENNUNG DEPONIE

FIG. 3

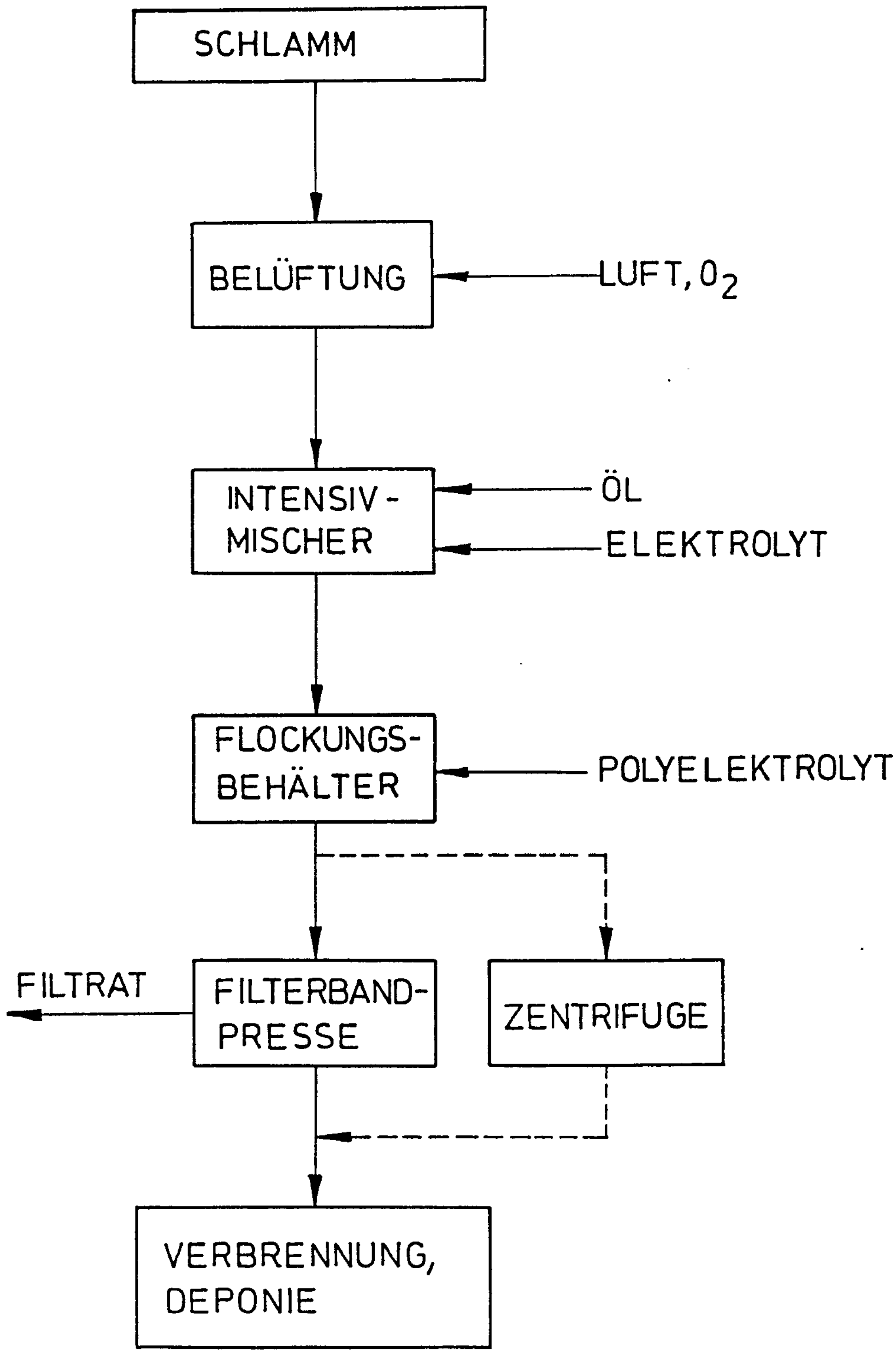
SCHLAMM
BELÜFTUNG
LUFT, $O_2$
INTENSIV-MISCHER
ÖL
ELEKTROLYT
FLOCKUNGS-BEHÄLTER
POLYELEKTROLYT
FILTRAT
FILTERBAND-PRESSE
ZENTRIFUGE
VERBRENNUNG, DEPONIE